# EUROPEAN PATENT SPECIFICATION

(11) **EP 0 594 921 B1**
(45) Date of publication and mention of the grant of the patent: **26.06.1996**
(21) Application number: 92830595.2
(22) Date of filing: 30.10.1992
(51) Int. Cl.: B29C 63/28, B31B 7/00

(54) **Apparatus for applying a removable liner layer in vessels**
Vorrichtung zum Aufbringen von entfernbaren Auskleidungen in Behältern
Dispositif pour l'application d'un revêtement amovible dans des récipients

(43) Date of publication of application: 04.05.1994
(73) Proprietor: PLASTIBAG S.r.l., I-20091 Bresso (Milano) (IT)
(72) Inventor: D'Aleo, Maria Pia, I-20091 Bresso, (Milano) (IT)
(74) Representative: Cicogna, Franco

(56) References cited:
- DE-A- 2 737 790
- FR-A- 1 436 023
- US-A- 1 993 751
- US-A- 2 065 828
- US-A- 4 142 453
- US-A- 4 723 935

## Description

### BACKGROUND OF THE INVENTION

The present invention relates to an apparatus for automatically applying a removable inner liner to vessels or containers in general.

As is known, in several industiral fields there are frequently used metal vessels, drums, barrels and the like, for the containment and shipment of products of several types, such as alimentary products, chemical products, toxic liquids or powders, paints, glues and the like.

Usually, as the contents of the vessel is withdrawn, at least a portion thereof remains adhering to the inner walls of the vessel, thereby it is necessary to remove the remaining materials in order to use again the vessel.

This remaining materials must be also removed in the case in which the vessel is not reused but it is disposed of, in order to prevent pollutions to the environment.

In order to facilitate the cleaning operations, the inner surface of the vessels is usually coated by a coating layer or liner, conventionally made of plastic material bags, which are usually made of polyethylene or the like.

These bags are usually applied by means of manual operations which, in addition to requiring a lot of time, also generate several problems, since, between the inner wall of the vessel and the bag, there are inevitably formed air bubbles, which prevent a good operation of the vessel.

In fact, because of the formation of the mentioned air bubbles, the vessel volume for the products is remarkably reduced, and, moreover, the contents can not be fully withdrawn, since a part thereof remains entrapped in folds or the like of the bag.

In this connection it should be also pointed out that in regions where there are present air bubbles or folds, the bag material can be easily torn or broken, expecially when, for removing the contained product, there are used collecting metal scraping elements and the like.

### SUMMARY OF THE INVENTION

Accordingly, the main object of the present invention is to solve the above mentioned problems, by providing an apparatus for automatically applying an inner coating or liner layer, of the easily removable type, in vessels in general, which is specifically designed for automatically performing all of the operations for applying said inner liner, while providing a perfect adhesion of the inner liner to the inner surface of the vessel.

Within the scope of the above mentioned aim, a main object of the present invention is to provide such an apparatus which also allows the possibility of properly coating also the edge or rim of the vessel, so as to prevent the formation of regions at which leakages can occur between the inner wall of the vessel and the inner liner layer.

Another object of the present invention is to provide such an apparatus which also affords the possibility of easily removing the liner, as required, by means of simple operations and in a very reduced time, and which apparatus, moreover, is very reliable and safe in operation.

According to one aspect of the present invention, the mentioned aim and objects, as well as yet other objects, which will become more apparent hereinafter, are achieved by an apparatus for automatically applying a removable inner liner layer, in vessels in general, characterized in that said apparatus comprises, on a supporting framework, a substantially cylindric body, to which a liner element can be applied, and having an expansible and resiliently deformable side surface, and a top wall substantially mating with the inner bottom of a vessel to be lined, said cylindric body being partially housed, at the bottom end portion thereof, in a bell body providing a holding or containment element for the resilient deformation of the bottom portion of the expansible side wall, in order to cause the liner element to adhere to the inner surface of said vessel and to bend the end portions of said inner liner on the edge of the vessel.

### BRIEF DESCRIPTION OF THE DRAWINGS

Further characteristics and advantages of the present invention will become more apparent hereinafter, from the following detailed disclosure, of a preferred, though not exclusive, embodiment thereof, which is illustrated, by way of an indicative but not limitative example, in the figures of the accompanying drawings, where:

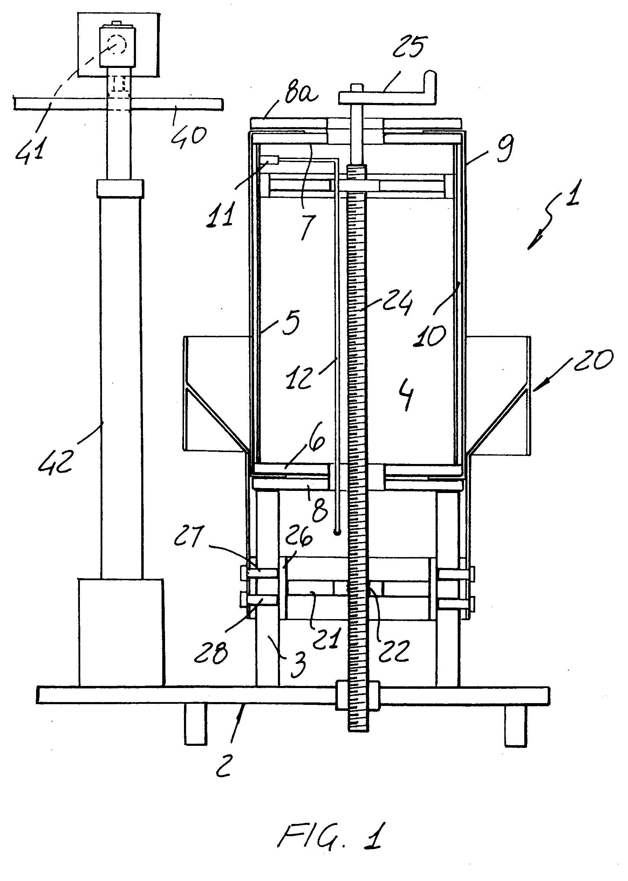

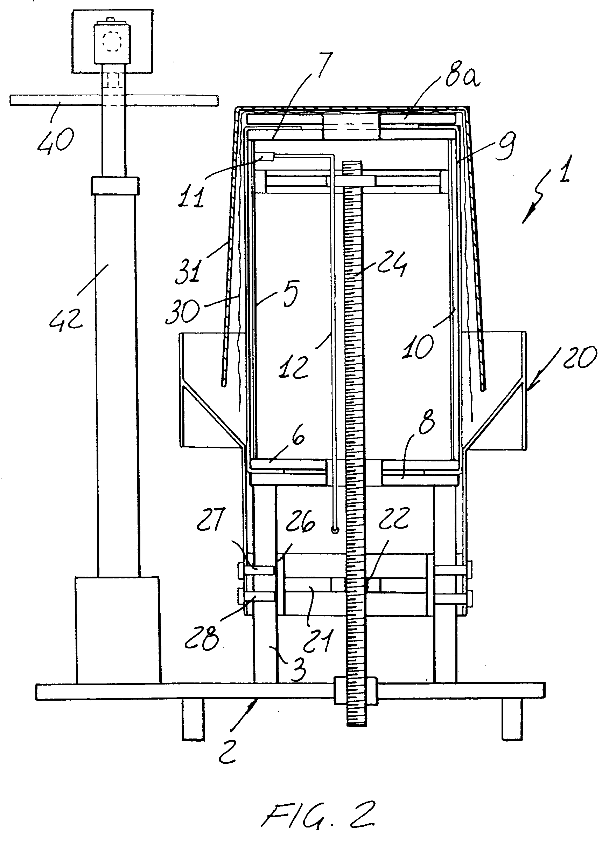

Figure 1 is a schematic partially cross-sectional view, illustrating the apparatus according to the present invention during an operating step in which there is adjusted the location or position of the bell body with respect to the cylindric body;
Figure 2 illustrates the apparatus according to the present invention after the application of the inner liner in the vessel; and
Figure 3 illustrates an operating step in which the inner liner is caused to perfectly adhere to the inner surface of the vessel.

### DESCRIPTION OF THE PREFERRED EMBODIMENT

With reference to the number references of the figures of the accompanying drawings, the apparatus for automatically applying an inner coating or liner layer, of a removable type, in vessels or containers in general, according to the present invention, which has been indicated generally at the reference number 1, comprises a supporting framework 2, on which there is arranged a supporting structure 3, on the top of which there is located a cylindric body, generally indicated at the reference number 4, comprises a rigid material cylindric drum 5, which is closed at the end portions thereof, by a bottom plate 6 and a top plate 7.

Adjoining the plate 6 and 7, there are provided a bottom and top counter-plate, indicated respectively at 8 and 8a, which can be mutually clamped so as to tightly hold the end portions of a tubular membrane 9 made of a resiliently deformable and expansible material.

The tubular membrane 9 provides, in cooperation with the rigid drum 5, a gap 10 which communicates with a pressurized air source, through a nozzle 11, leading to the rigid drum 5 and connected to the pressure source by means of a pipe 12.

With the support 3 there is associated a bell body 20 which is arranged at the bottom portion of the tubular membrane 9 and is adjustably supported, in order to in turn adjust the position of the bell body, with respect to the free edge or rim of the vessel, as it will become more apparent hereinafter.

In a not limitative embodiment, the means for adjusting the height of the bell body 20, comprise a disc 21, including a threaded hole 22, which is supported by the support 3 and engages with a rotary threaded shaft or spindle 24, in turn axially supported in said drum 10 and adapted to be connected with a removable crank 25.

The disc 21 is connected to an annular body 23, therefrom extend radial pins 27, passing through slots 28 of the support 3, and connected to the bottom portion of the bell body 20, which can be displaced vertically, by causing the threaded spindle or shaft 24 to rotate.

On the cylindric body 4, an inner liner can be applied, said liner comprising a polythene or the like material bag 30, and, after the application of said bag, the vessel 31 can be assembled, so as to assume one of several conventional configurations.

In this connection it should be pointed out that the top plate has preferably a shape mating with the inner bottom of the vessel or container 31.

In order to hold the vessel 31 in its set position, there is provided a sealing plate 40, which is supported by a radially extending arm 41, coupled to a column post 42, thereon there are arranged all of the drive means of the apparatus.

The arm 41 can rotate with respect to the mentioned post, so as to cause the sealing or tightness plate 40 to be moved away, as the vessel must be applied or removed, whereas said plate 40 will be properly located and pressed on the bottom of the vessel during the operating steps of the apparatus.

In operation, it is necessary to at first adjust the height position of the bell body 20, so as to provide a small gap between the bottom free edge of the container and the edge of the bell body.

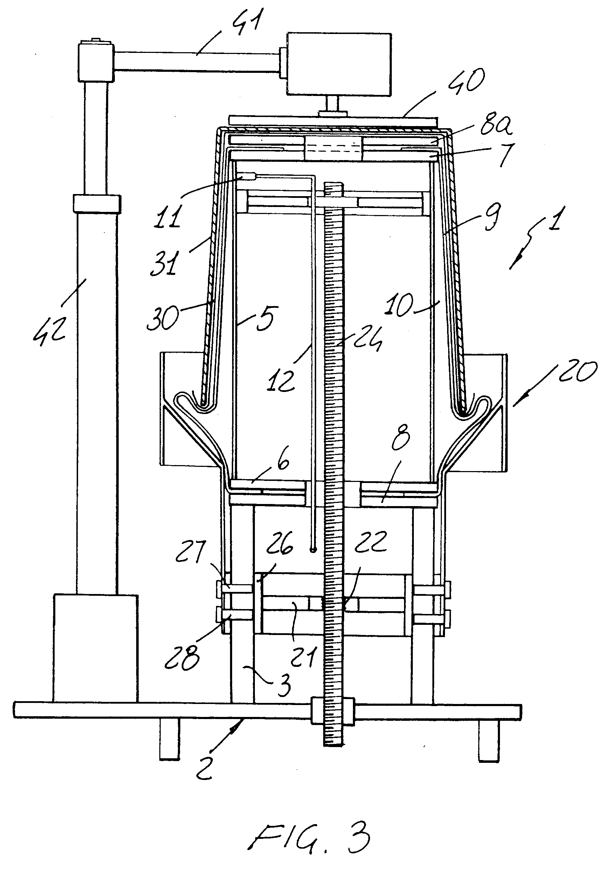

Then, the inner liner element 30 is applied, comprising a bag or the like, and, above the latter, there is assembled the vessel 31 as is clearly shown in figure 2.

Then, pressurized air is supplied inside the bag 10, so as to resiliently deform the tubular membrane 9, which perfectly adheres on the inner wall of the vessel, and so as to cause the inner liner to also perfectly adhere, said inner liner being firmly held since, because of the withdrawing of the air, there is provided a sucker type of effect.

At the free edge thereof the tubular membrane, which is not herein counterbiassed by the vessel, will be dilated, so as to contact the mentioned bell body, which will operate as a holding or containment element, and, in actual practice, will provide an upwardly turned portion, as clearly shown in figure 3, which will cause the free end portion of the liner to be outwardly turned on the outer rim of the vessel, so that the inner element will perfectly adhere to the walls of the vessel.

After having obtained this adhesion, the pressure is removed from the gap 9 and, then, after having also removed the plate 40, the vessel will be withdrawn with the liner perfectly adhering thereon, since the adhesion has been obtained by means of an even pressure effect applied on the overall surface of said liner, owing to the resilient expansion of the membrane.

From the above disclosure it should be apparent that the invention fully achieves the intended aim and objects.

In particular, the fact is to be pointed out that, by exploiting the resilient expansion of a membrane, it is obtained a perfect coupling of the inner liner to the inner wall of the vessel, independetnly from the configuration of the latter which can be both of cylindric shape, conic shape, any possible air bubbles between the liner and wall of the vessel being prevented from occurring.

The invention as disclosed is susceptible to several modifications and variations all of which will come within the scope of the claims.

Thus, for example, the means for positioning the bell body with respect to the cylindric body can be of any suitable types, such as pneumatic pistons or the like.

In practicing the invention, the used materials, as well as the contingent shapes and size can be any according to requirements.

## Claims

1. An apparatus (1) for automatically applying a removable inner liner layer (30), in vessels (31) in general, characterized in that said apparatus comprises, on a supporting framework (2), a substantially cylindric body (4), to which a liner element (30) can be applied, and having an expansible and resiliently deformable side surface (9), and a top wall (8a) substantially mating with the inner bottom of a vessel to be lined, said cylindric body being partially housed at the bottom end portion thereof, in a bell body (20) providing a holding or containment element for the resilient deformation of the bottom portion of the expansible side wall, in order to cause the liner element to adhere to the inner surface of said vessel and to bend the end portions of said inner liner on the edge of the vessel.

2. An apparatus, according to Claim 1, characterized in that said supporting framework (2) supports said cylindric body (4) and a shaft to which there is rotatably coupled an arm (41), supporting in turn a plate (40) which can be engaged with the outer bottom of the vessel to be lined.

3. An apparatus, according to Claims 1 and 2, characterized in that said cylindric body (4) comprises a rigid drum body (5) having, at the end portions thereof, a bottom plate (8) and a top plate (8a) facing, respectively, a bottom counterplate (6) and top counterplate (7), between said plates and counterplates being restrained the axial end portions of a tubular membrane (9), which constitutes the expansible side surface.

4. An apparatus, according to one or more of the preceding claims, characterized in that said tubular membrane (9) defines, in cooperation with the outer surface of the rigid drum, a tightly closed gap (10) which communicates with a pressurized air supply nozzle (11).

5. An apparatus, according to one or more of the preceding claims, characterized in that said bell body (20) is connected to said support through the interposition of height adjusting means, for changing the position of the bell body (20) with respect to said cylindric body (4).

6. An apparatus, according to one or more of the preceding claims, characterized in that said height adjusting means comprise a disc (21) having a threaded central hole (22) therein there is engaged a threaded spindle (24) axially extending in said drum body (4), said disc (21) being connected to a ring therefrom radial pin (27) project, said pins being slidably housed in slots (28) of said supports and engaging with said bell body (20).

7. An apparatus, according to claims 2 to 6, characterized in that said plate (40), by engaging the outer bottom of said vessel, holds firmly said vessel in a said position, during the resilient expansion step of said tubular membrane (9).

## Patentansprüche

1. Ein Gerät (1) zum automatischen Aufbringen einer entfernbaren inneren Deckschicht (30), allgemein in Gefäßen (31), dadurch gekennzeichnet, daß dieses Gerät auf einem Tragegerüst (2) einen im wesentlichen zylindrischen Körper (4) umfaßt, an dem ein Deckschichtelement (30) angebracht werden kann, und mit einer dehnbaren und elastisch verformbaren Seitenfläche (9) und einer oberen Wand (8a), die im wesentlichen mit dem Innenboden eines zu beschichtenden Gefäßes zusammenpaßt, wobei dieser zylindrische Körper in dem Bereich seines unteren Endes teilweise in einen ausgeweiteten Körper (20) eingelassen ist, der ein Halte- oder Behälterelement für die elastische Verformung des unteren Bereiches der dehnbaren Seitenwand darstellt, um zu bewirken, daß das Deckschichtelement an der Innenfläche dieses Gefäßes haftet, und um die Endbereiche dieser inneren Deckschicht über den Rand des Gefäßes zu biegen.

2. Ein Gerät nach Anspruch 1, dadurch gekennzeichnet, daß dieses Tragegerüst (2) diesen zylindrischen Körper (4) sowie eine Welle trägt, mit der ein Arm (41) drehbar verbunden ist, der wiederum eine Platte (40) trägt, die den Außenboden des zu beschichtenden Gefäßes fassen kann.

3. Ein Gerät nach den Ansprüchen 1 und 2, dadurch gekennzeichnet, daß dieser zylindrische Körper (4) einen starren walzenförmigen Körper (5) umfaßt, der an seinen Endbereichen eine Unterplatte (8) und eine Oberplatte (8a) besitzt, die jeweils auf eine untere Gegenplatte (6) und eine obere Gegenplatte (7) ausgerichtet sind, wobei zwischen diesen Platten und Gegenplatten die axialen Endbereiche einer rohrförmigen Membran (9) gehalten werden, die die dehnbare Seitenfläche darstellt.

4. Ein Gerät nach einem oder mehreren der vorstehenden Ansprüche, dadurch gekennzeichnet, daß diese rohrförmige Membran (9) zusammen mit der Außenfläche der starren Walze einen dicht abgeschlossenen Spalt (10) festlegt, der mit einer Zufuhrdüse für Druckluft (11) verbunden ist.

5. Ein Gerät nach einem oder mehreren der vorstehenden Ansprüche, dadurch gekennzeichnet, daß dieser ausgeweitete Körper (20) mit diesem Tragegerüst durch das Einschieben einer Vorrichtung zur Anpassung der Höhe verbunden ist, um die Position des ausgeweiteten Körpers (20) bezüglich dieses zylindrischen Körpers (4) zu verändern.

6. Ein Gerät nach einem oder mehreren der vorstehenden Ansprüche, dadurch gekennzeichnet, daß diese Vorrichtung zur Anpassung der Höhe eine Scheibe (21) umfaßt, die ein Mittelloch (22) mit einem Gewinde besitzt, in das eine mit einem Gewinde versehene Spindel (24) eingreift, die sich axial in diesen walzenförmigen Körper (4) erstreckt, wobei diese Scheibe (21) mit einem Ring verbunden ist, von dem Stifte (27) radial hervorstehen, wobei diese Stifte gleitend in Schlitze (28) dieser Tragegerüste eingelassen sind und mit diesem ausgeweiteten Körper (20) verbunden sind.

7. Ein Gerät nach den Ansprüchen 2 bis 6, dadurch gekennzeichnet, daß diese Platte (40) dieses Gefäß während des Schrittes der elastischen Ausdehnung dieser rohrförmigen Membran (9) fest in dieser Position hält, indem sie den Außenboden des Gefäßes faßt.

## Revendications

1. Un appareil (1) pour appliquer de manière automatisée un recouvrement intérieur (30) amovible aux récipients (31) en général, caractérisé en ce que ledit appareil comprend, sur un châssis de support (2), un corps essentiellement cylindrique (4) auquel peut être appliqué un recouvrement (30), et ayant une surface latérale (9) expansible et déformable de manière élastique et une paroi supérieure (8a) s'adaptant en substance au fond dans l'intérieur du récipient à recouvrir, ledit corps cylindrique étant partiellement situé à l'extrémité de fond de celui-ci, dans un corps élargi (20) mettant en oeuvre un élément de retenue ou conteneur pour la déformation élastique de la partie de fond de la paroi latérale expansible, afin de provoquer l'adhérence de l'élément recouvrant à la surface intérieure dudit récipient et de plier les extrémités dudit recouvrement intérieur sur le bord du récipient.

2. Un appareil selon la revendication 1, caractérisé en ce que ledit châssis de support (2) porte ledit corps cylindrique (4) et un arbre auquel est relié par rotation un bras (41), de sa part supportant une planche (40) qui peut être mise en contact avec le fond externe du récipient à recouvrir.

3. Un appareil selon les revendications 1 et 2, caractérisé en ce que ledit corps cylindrique (4) comprend un corps rigide (5) en forme de tambour ayant sur ses extrémités une plaque inférieure (8) et une plaque supérieure (8a) opposées respectivement à une contre-plaque (6) inférieure et une contre-plaque (7) supérieure, entre lesdites plaques et contre-plaques étant fixées les extrémités axiales d'une membrane tubulaire (9) formant la surface latérale expansible.

4. Un appareil selon l'une ou plusieurs des revendications précédentes, caractérisé en ce que ladite membrane tubulaire (9) définit, conjointement avec la surface externe du tambour rigide, un interstice (10) étanche communiquant avec une buse (11) d'alimentation d'air sous pression.

5. Un appareil selon l'une ou plusieurs des revendications précédentes, caractérisé en ce que ledit corps élargi (20) est relié audit support par l'intermédiaire d'un moyen d'ajustage de la hauteur pour varier la position du corps élargi (20) par rapport audit corps cylindrique (4).

6. Un appareil selon l'une ou plusieurs des revendications précédentes, caractérisé en ce que ledit moyen d'ajustage de la hauteur comprend un disque (21) ayant au centre une ouverture filetée (22) dans laquelle se trouve une tige filetée (24) s'étendant axialement dans ledit corps à tambour (4), ledit disque (21) étant relié à un anneau dont se projettent des chevilles radiales (27), lesdites chevilles glissant dans des fentes (28) desdits supports, et étant reliées audit corps élargi (20).

7. Un appareil selon les revendications de 2 à 6, caractérisé en ce que ladite plaque (40), en touchant au fond externe dudit récipient, tient fermement ledit récipient dans ladite position lors de l'étape d'expansion élastique de ladite membrane tubulaire (9).
